# EUROPÄISCHE PATENTSCHRIFT

(11) **EP 0 657 390 B1**
(45) Veröffentlichungstag und Bekanntmachung des Hinweises auf die Patenterteilung: **12.05.1999**
(21) Anmeldenummer: 94119201.5
(22) Anmeldetag: 06.12.1994
(51) Int. Cl.: C03B 5/235, C03B 5/237, F27B 9/30, F27B 9/40

(54) **Verfahren und Anordnung zum Regeln des Verbrennungsvorgangs in Glas-Wannenöfen**
Method and disposition for controlling the burning process in a glass tank furnace
Procédé et disposition pour le réglage de l'incinération dans un four à bain de fusion de verre

(30) Priorität: 11.12.1993 DE 4342334
(43) Veröffentlichungstag der Anmeldung: 14.06.1995
(73) Patentinhaber: BETEILIGUNGEN SORG GMBH & CO. KG, D-97816 Lohr am Main (DE)
(72) Erfinder: Wagner, Manfred, D-97816 Lohr am Main (DE)
(74) Vertreter: Zapfe, Hans, Dipl.-Ing.

(56) Entgegenhaltungen:
- US-A- 1 937 017
- US-A- 2 068 924
- US-A- 2 171 597
- US-A- 4 874 311

## Beschreibung

Die Erfindung betrifft ein Verfahren zum Regeln des Verbrennungsvorgangs in Glas-Wannenöfen mit zyklisch gesteuerter, alternierender Versorgung des Ofenraums beiderseits der Wannen-Längsachse mit fossilen Brennstoffen und Verbrennungsluft unter Erfassung der Temperaturwerte im Ofenraum und mindestens zeitweiser Regelung der Verbrennungsluftmenge und der Brennstoffmenge in Abhängigkeit von den Temperaturwerten mittels eines Luftmengen-Reglers und eines Brennstoffmengen-Reglers und zugehöriger Stellglieder für die Luftleitung und für die Brennstoffleitung bei gleichzeitiger Berücksichtigung des Verhältnisses von Luftmenge zur Brennstoffmenge.

Ein derartiges Verfahren, das auch als "Kaskadenregelung" bezeichnet werden kann, gehört zum Stande der Technik. Hierbei ist jedoch die Temperatur im Ofenraum die sogenannte Führungsgröße, die zunächst den Luftmengen-Regler führt und dieser wiederum den Brennstoffmengen-Regler, wobei das Verhältnis von Luftmenge zu Brennstoffmenge zumindest weitgehend konstant gehalten wird.

Bei einer derartigen Temperaturregelung von Schmelzwannen kommt es durch das ständige Ausregeln bzw. Hochregeln im Rahmen der zyklischen Umschaltung von einer Wannenhälfte auf die andere Wannenhälfte zu zwangsläufigen Änderungen der Luft- und Brennstoffmenge und damit zu erhöhten N0ₓ-Emissionen. Die Zyklus-Zeit beträgt etwa 20 Minuten, und danach wird die Flammenrichtung umgekehrt. Die Erfindung ist anwendbar bei Schmelzwannen, bei denen die Luftzuführungsöffnungen und die Brenner in der Stirnwand des Ofenraumes am Beschickungsende angeordnet sind. Bei jeweils einseitiger Beaufschlagung der einen oder der anderen Ofenhälfte mit Verbrennungsluft und Brennstoff bildet sich auf diese Weise eine U-förmige Flamme aus. Die Erfindung ist aber auch anwendbar bei Wannenöfen, bei denen die Luft-Zuführungsöffnungen und die Brenner in den Seitenwänden des Ofenraums angeordnet sind, so daß sich Querstrom-Flammen ausbilden. Bei der Regelung derartiger Beheizungsverfahren stellen sich mehr oder weniger periodisch Temperaturspitzen ein, und diese sind eine der wesentlichen Ursachen für einen N0ₓ-Anteil in den Abgasen.

Der Erfindung liegt daher die Aufgabe zugrunde, das eingangs angegebene Regelverfahren dahingehend zu verbessern, daß der NOₓ-Anteil in den Abgasen deutlich vermindert wird.

Die Lösung der gestellten Aufgabe erfolgt bei dem eingangs beschriebenen Verfahren erfindungsgemäß dadurch, daß in einer ersten Betriebsphase eine Reihe von Temperaturwerten gemessen und über mindestens einen Zyklus gespeichert und daraus ein Temperatur-Mittelwert gebildet wird, und daß in einer weiteren Betriebsphase die Regelung der Verbrennungsluftmenge und der Brennstoffmenge in Abhängigkeit von dem gebildeten Temperatur-Mittelwert durchgeführt wird.

Die Regelung kann dabei vorteilhaft auf folgende Weise durchgeführt werden, nämlich:
1. Dadurch, daß in der weiteren Betriebsphase durch den Luftmengen-Regler das Luftmengen-Stellglied in Abhängigkeit von dem gebildeten Temperatur-Mittelwert zumindest vorübergehend auf einem konstanten Luftmengen-Wert, der der von dem Temperatur-Mittelwert im Vergleich zu einem Temperatur-Sollwert vorgegebenen Heizleistung entspricht, festgehalten wird und während dieser Zeit durch den Brennstoffmengen-Regler das Brennstoffmengen-Stellglied geregelt wird.
   oder
2. dadurch, daß in der weiteren Betriebsphase durch den Brennstoffmengen-Regler das Brennstoffmengen-Stellglied in Abhängigkeit von dem gebildeten Temperatur-Mittelwert zumindest vorübergehend auf einem konstanten Brennstoffmengen-Wert, der der von dem Temperatur-Mittelwert im Vergleich zu einem Temperatur-Sollwert vorgegebenen Heizleistung entspricht, festgehalten wird und während dieser Zeit durch den Luftmengen-Regler das Luftmengen-Stellglied geregelt wird.

Der Kern der Erfindung besteht also darin, daß nach einer relativ kurzen ersten Betriebsphase die Temperaturführung der Regelung durch eine Festwertregelung abgelöst wird, bei der entweder die Verbrennungsluftmenge festgehalten und die Brennstoffmenge in Abhängigkeit von der konstanten Verbrennungsluftmenge geregelt wird, oder bei der die Brennstoffmenge festgehalten und die Verbrennungsluftmenge in Abhängigkeit von der konstanten Brennstoffmenge geregelt wird. In beiden Fällen handelt es sich im Ergebnis um eine Regelung der thermischen Leistung des Ofens.

Vorteilhaft wird dabei das Brennstoffmengen-Stellglied zusätzlich in Abhängigkeit von etwa sich ändernden Parametern in der Brennstoffleitung geregelt. Unter dem Begriff "Menge" ist stets die Menge pro Zeiteinheit zu verstehen. Es versteht sich, daß der Temperatur-Mittelwert in Relation zu einem Temperatur-Sollwert gesetzt wird.

Bei Anwendung des erfindungsgemäßen Verfahrens unterbleiben die beim Umschalten der Flammenrichtung ansonsten auftretenden starken Temperaturänderungen, so daß dadurch der NOₓ-Anteil in den Abgasen merklich reduziert wird.

Durch die angegebene Festwertregelung werden die Schwankungen in den Verbrennungsluftmengen und in den Brennstoffmengen minimiert. Dadurch wird eine kontinuierliche und schwankungsärmere Befeuerung der Schmelzwanne erreicht. Dies führt nicht nur zu der bereits beschriebenen Reduzierung des NOₓ-Anteils in den Abgasen, sondern auch zu Einsparungen im Brennstoffverbrauch. Außerdem entsteht dadurch eine schonendere Fahrweise des Ofenbetriebs, wodurch die Lebensdauer des Ofens, die sogenannte Wannenreise, erhöht wird.

Das erfindungsgemäße Regelverfahren bzw. eine dafür geeignete und weiter unten noch beschriebene Regelanordnung lassen sich nachträglich ohne großen Umrüstungs-Aufwand auch bei bereits vorhandenen Glas-Wannenöfen verwirklichen.

Die Anzahl der Zyklen für die Bestimmung des Temperatur-Mittelwertes kann dabei zwischen 2 und 10 liegen, vorzugsweise aber zwischen 3 und 6.

Es ist im Zuge einer weiteren Ausgestaltung der Erfindung von besonderem Vorteil, wenn der Sauerstoffgehalt in den Abgasen des Ofenraumes gemessen und ein dem Sauerstoffgehalt entsprechendes Trimmsignal dem Brennstoffmengen-Regler zugeführt und in diesem Regler in der Weise verarbeitet wird, daß durch Beeinflussung des Brennstoffmengen-Stellgliedes der Sauerstoffgehalt in den Abgasen auf einen kleinstmöglichen Wert geregelt wird, der vorzugsweise unterhalb von 1,5 % liegt. Alternativ kann hierbei das Trimmsignal dem Luftmengen-Regler zugeführt und in diesem Regler in der Weise verarbeitet werden, daß durch Beeinflussung des Luftmengen-Stellgliedes der Sauerstoffgehalt in den Abgasen in analoger Weise geregelt wird.

Es ist dabei möglich, zur Bestimmung der Meßgrößen für die Verbrennungsluftmenge und die Brennstoffmenge Meßverfahren für die Durchflußmessung anzuwenden, bei der Luftmengen-Messung beispielsweise die Messung durch Blenden oder Düsen und bei der Brennstoffmengen-Messung durch Turbinenradzähler oder analoge Meßeinrichtungen, je nach dem, ob es sich bei dem Brennstoff um Gas oder um Öl handelt. Es ist aber besonders vorteilhaft, wenn als Meßgrößen für die Verbrennungsluftmenge und die Brennstoffmenge die Stellgrößen für die Stellung der Stellglieder verwendet werden.

Es versteht sich, daß dabei folgende Voraussetzungen zumindest weitgehend eingehalten werden: Bei einer Ölbeheizung sollten Öldruck, Öltemperatur und Ölumlauf zumindest beim Wechsel der Beheizung der jeweiligen Ofenseite zumindest weitgehend konstant gehalten werden. Bei der Messung von Gas- und Verbrennungsluftmengen müssen diese Mengen auf Druck und Temperatur korrigiert werden, d.h. auf Norm-Kubikmeter umgerechnet werden.

Nun ist es möglich, daß insbesondere nach längerer Betriebsdauer die gemessene Temperatur im Ofenraum vom vorgegebenen Sollwert abweicht. Um diese evtl. Abweichungen zu korrigieren, ist es im Sinne einer wiederum weiteren Ausgestaltung der Erfindung besonders zweckmäßig, wenn während der weiteren Betriebsphase, in der die Temperaturführung abgekoppelt ist, die Temperaturwerte weiterhin erfaßt und mit einem äußeren Temperatur-Fenster mit je einem äußersten unteren und einem äußersten oberen Temperatur-Grenzwert verglichen werden, und wenn beim Unterschreiten des äußersten unteren Temperatur-Grenzwertes ein Umschalten auf die Regelung gemäß der ersten Betriebsphase mit Erhöhung der thermischen Leistung und beim Überschreiten des äußersten oberen Temperatur-Grenzwertes ein Umschalten auf die Regelung der ersten Betriebsphase mit Verringerung der thermischen Leistung herbeigeführt wird. In diesen Fällen folgt eine entsprechende Erhöhung oder Verringerung der Luft- und der Brennstoffmenge wegen der durch den Regler erzwungenen Korrelation unmittelbar nach. Mit anderen Worten: Für kurze Zeit wird die bekannte Temperaturführung des Regelsystems wieder eingeführt.

Um derartige Regeleingriffe möglichst einzuschränken oder zu vermeiden, ist es besonders vorteilhaft, wenn die Temperaturwerte mit einem engeren inneren Temperatur-Fenster verglichen werden, das je einen inneren unteren und einen inneren oberen Temperatur-Grenzwert besitzt, und wenn die erstmalige Unter- oder Überschreitung dieser inneren Temperatur-Grenzwerte ohne Auslösung einer Regelhandlung gespeichert werden, und wenn bei mindestens einer weiteren Unter- oder Überschreitung des gleichen inneren unteren oder inneren oberen Temperatur-Grenzwertes eine Erhöhung oder eine Herabsetzung der thermischen Leistung herbeigeführt wird, derart, daß die Temperaturwerte im wesentlichen in der Mitte des vorgegebenen Fensters verlaufen.

Man kann in diesem Falle auch von sogenannten äußeren und inneren Toleranzbändern sprechen.

Weitere vorteilhafte Ausgestaltungen des erfindungsgemäßen Verfahrens ergeben sich aus den übrigen Verfahrensansprüchen.

Die Erfindung betrifft auch eine Anordnung zur Durchführung des Regelverfahrens der eingangs beschriebenen Gattung bei Glas-Wannenöfen mit
a) einem Ofenraum, in dem beiderseits der Wannen-Längsachse mindestens je eine Luftzuführungsöffnung und mindestens je ein Brenner für fossile Brennstoffe angeordnet ist und in dem sich mindestens ein Temperaturfühler befindet, dem ein Temperatur-Regler mit einem Sollwert-Eingang und einem Reglerausgang nachgeschaltet ist,
b) einer Luftzuführungsleitung mit einem Luftmengen-Regler und einem Luftmengen-Stellglied, für die Versorgung der mindestens einen Luftzuführungsöffnung,
c) einem Istwertgeber für die Luftmenge,
d) einer Brennstoff-Zuführungsleitung mit einem Brennstoffmengen-Regler und einem Brennstoffmengen-Stellglied für die Versorgung des mindestens einen Brenners, wobei der Istwert-Geber für die Luftmenge dem Brennstoffmengen-Regler im Sinne der Bildung eines vorgegebenen Verhältnisses zwischen Brennstoff- und Luftmenge aufgeschaltet ist,
e) Umschaltgliedern für eine zyklisch gesteuerte, alternierende Versorgung der beiderseits der Wannen-Längsachse befindlichen Hälften des Ofenraums mit Brennerflammen.
   Zur Lösung der gleichen Aufgabe ist eine derartige Regelanordnung erfindungsgemäß dadurch gekennzeichnet, daß
f) der Temperatur-Regler einer Operationseinheit mit Speicherplätzen für eine Folge von Temperaturwerten und mit einer Recheneinheit für die Bildung von Mittelwerten aus den Temperaturwerten aufgeschaltet ist,
g) ein Umschalter vorhanden ist, mit dem wahlweise der Regelausgang des Temperatur-Reglers oder der Ausgang der Operationseinheit mit dem gebildeten Temperatur-Mittelwert als Sollwert einem Betriebsarten-Baustein mit einem ersten Ausgang zum Luftmengen-Regler und mit einem zweiten Ausgang zum Brennstoffmengen-Regler aufschaltbar ist, wobei die Auslegung der Anordnung so getroffen ist, daß in einer ersten Betriebsphase eine Reihe von Temperaturwerten gemessen und über mindestens einen Zyklus gespeichert und daraus ein Temperatur-Mittelwert gebildet wird, wobei in der ersten Betriebsphase entweder
g1)über den Betriebsarten-Baustein der Istwert des Luftmengen-Reglers dem Brennstoffmengen-Regler aufschaltbar ist und in einer weiteren Betriebsphase durch den Luftmengen-Regler das Luftmengen-Stellglied in Abhängigkeit von dem gebildeten Temperatur-Mittelwert zumindest vorübergehend auf einem konstanten Luftmengen-Wert festgehalten wird und während dieser Zeit durch den Brennstoffmengen-Regler das Brennstoffmengen-Stellglied geregelt wird, oder
g2)über den Betriebsarten-Baustein der Istwert des Brennstoffmengen-Reglers dem Luftmengen-Regler aufschaltbar ist und in einer weiteren Betriebsphase durch den Brennstoffmengen-Regler das Brennstoffmengen-Stellglied in Abhängigkeit von dem gebildeten Temperatur-Mittelwert zumindest vorübergehend auf einem konstanten Brennstoffmengen-Wert festgehalten wird und während dieser Zeit durch den Luftmengen-Regler das Luftmengen-Stellglied geregelt wird.

Weitere vorteilhafte Ausgestaltungen der erfindungsgemäßen Anordnung ergeben sich aus den übrigen Anordnungs-Ansprüchen.

Ein Ausführungsbeispiel des Erfindungsgegenstandes wird nachfolgend durch die Figuren 1 bis 6 anhand eines Regelsystems näher erläutert, bei dem primär der Luftmengen-Regler und davon abhängig der Brennstoffmengen-Regler geregelt wird.

Es zeigen:
- Figur 1: eine schematische Darstellung einer Glas-Schmelzanlage mit einem Rekuperator zur Vorwärmung der Verbrennungsluft und entsprechenden Versorgungsleitungen für die Verbrennungsluft und den Brennstoff,
- Figur 2: ein Blockschaltbild der Regelanordnung für die Durchführung des erfindungsgemäßen Regelverfahrens,
- Figur 3: ein Signalflußbild für die Startphase des Regelverfahrens,
- Figur 4: ein Signalflußbild für einen Regelabschnitt mit Temperatur-Führung der Mengen an Verbrennungsluft und Brennstoff,
- Figur 5: ein Signalflußbild des erfindungsgemäßen Regelverfahrens nach Abkoppelung der Temperaturführung und
- Figur 6: ein Diagramm von Temperaturverläufen im Zusammenhang mit einem äußeren Toleranzband TA und einem inneren Toleranzband TI.

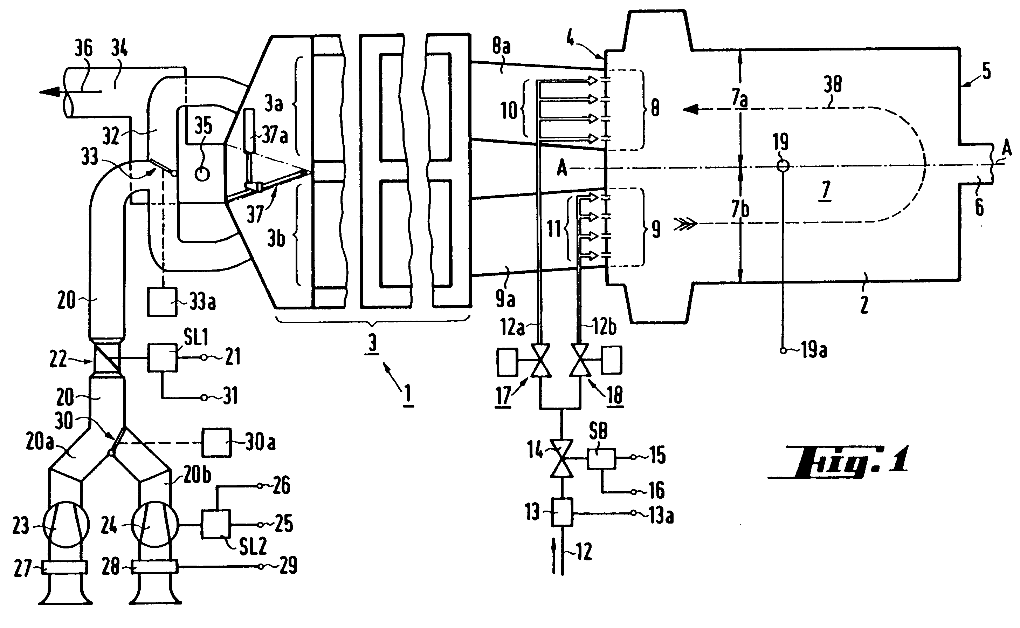

In Figur 1 ist eine Glas-Schmelzanlage 1 dargestellt, zu der ein Glas-Wannenofen 2 und ein Rekuperator 3 gehören, in dem die Verbrennungsluft durch die Abgase des Glas-Wannenofens 2 aufgeheizt wird.

Der Glas-Wannenofen 2 besitzt eine Längsachse A-A sowie auf der Beschickungsseite eine erste Stirnwand 4 und auf der Entnahmeseite eine zweite Stirnwand 5, von der ein Überlauf 6 zu einer nicht dargestellten Arbeitswanne oder einer Verteilerwanne für die Versorgung sogenannter Speiser oder Vorherde führt. Durch die Wannen-Längsachse A-A wird ein Ofenraum 7 in eine linke Raumhälfte 7a und eine rechte Raumhälfte 7b unterteilt.

In der Stirnwand 4 befindet sich auf der Seite 7a eine erste Luftzuführungsöffnung 8 und auf der Seite 7b eine zweite Luftzuführungsöffnung 9. Diese Luftzuführungsöffnungen stehen über Kanäle 8a und 9a mit dem Rekuperator 3 in Verbindung. Unterhalb der Luftzuführungsöffnung 8 befindet sich eine Gruppe von vier Brennern 10, und unterhalb der Luftzuführungsöffnung 9 befindet sich eine weitere Gruppe von vier Brennern 11.

Die Brenner 10 und 11 werden über eine zentrale Brennstoffleitung 12 mit Brennstoff versorgt, dessen Durchfluß über einen Durchflußmesser 13 bestimmt wird. An dessen Ausgang 13a steht ein erster Istwert für den Brennstoffverbrauch an. Dem Durchflußmesser 13 folgt ein Regelventil 14 mit einem Brennstoffmengen-Stellglied SB, das seine Stellgröße über einen Eingang 15 erhält. Über einen Ausgang 16 kann dem Stellglied SB ein weiterer Istwert für den Brennstoffdurchfluß entnommen werden, wobei angenommen wird, daß der Durchfluß durch das Regelventil 14 der Stellung des Stellgliedes SB proportional ist. Hinter dem Regelventil 14 verzweigt sich die Brennstoffleitung 12 in zwei Zweigleitungen 12a und 12b, die mit alternierend angesteuerten Absperrventilen 17 und 18 ausgestattet sind.

An der Ofendecke ist etwa in Ofenmittel ein Temperaturfühler 19 mit einem Fühleranschluß 19a vorhanden. Dieser Temperaturfühler kann stellvertretend für eine Mehrzahl von Temperaturfühlern stehen, die an unterschiedlichen Stellen der Ofendecke angebracht sind. Als Istwertgeber für die Brennstoffmenge können wahlweise der Durchflußmesser 13 oder der Ausgang 16 des Brennstoffmengen-Stellgliedes SB verwendet werden.

Auf der Luftseite der Schmelzanlage befindet sich eine Luft-Zuführungsleitung 20 mit einem Luftmengenstellglied SL1, das seine Stellsignale (Stellgröße) über einen Eingang 21 erhält und an eine Drosselklappe 22 weitergibt. Der Luftzuführungsleitung 20 sind zwei Zweigleitungen 20a und 20b vorgeschaltet, in denen sich je ein Axial-Ventilator 23 bzw. 24 befindet, deren Drehzahl über je ein weiteres Luftmengen-Stellglied SL2 bestimmt wird, das seine Stellsignale (Stellgröße) über einen weiteren Eingang 25 erhält. Das Stellglied SL2 besitzt einen weiteren Ausgang 26, an dem der Istwert für den Luftdurchsatz ansteht. Den Axial-Ventilatoren 23 und 24 ist je ein Durchfluß-Messer 27 bzw. 28 vorgeschaltet, der als Einlauf-Meßdüse ausgebildet ist. Jeder dieser Durchflußmesser besitzt einen Ausgang 29, an dem gleichfalls der Istwert für den Luftdurchsatz ansteht. Jeweils eine der Zweigleitungen 20a oder 20b dient als Stand-By und ist mit den gleichen Stellgliedern SL2 und den Eingängen 25 sowie den Ausgängen 26 und 29 versehen, was jedoch nur in Bezug auf die Zweigleitung 20b dargestellt ist. An der Einmündungsstelle der Zweigleitungen 20a und 20b befindet sich eine Umschalt-Klappe 30, die durch ein zugehöriges Stellglied 30a umschaltbar ist.

Das Luftmengen-Stellglied SL1 besitzt gleichfalls einen Ausgang 31, an dem der Istwert für den Luftdurchsatz abgegriffen werden kann. Die Istwerte für den Luftdurchsatz können also wahlweise an den Ausgängen 26, 29 oder 31 erfaßt werden.

Die Luftzuführungsleitung 20 mündet über ein T-Stück 32 in die jeweilige Hälfte 3a oder 3b des Rekuperators 3. Für die jeweilige Auswahl ist ein Umschaltglied 33 vorgesehen, das seine Stellbefehle über ein weiteres Stellglied 33a erhält. Vom Rekuperator 3 führt eine Abgasleitung 34, in der sich eine Sonde 35 zur Bestimmung des Sauerstoffanteils in den Abgasen befindet, zu einem nicht gezeigten Kamin (Pfeil 36). Am Anfang der Abgasleitung 34 befindet sich ein weiteres Umschaltglied 37, das durch ein Stellglied 37a gesteuert wird.

Durch entsprechende Ansteuerung der Absperrventile 17 und 18 sowie der Umschaltglieder 33 und 37 wird erreicht, daß der Flammenanfang jeweils nur in einer der beiden Raumhälften 7a und 7b des Ofenraumes 7 liegt. Im vorliegenden Fall befinden sich die Brenner 11 im Betrieb, und die Luftzufuhr erfolgt über den Kanal 9a, so daß sich eine U-förmige Flamme ausbildet, die durch den gestrichelten Pfeil 38 angedeutet ist. Während dieses Zyklus sind die Brenner 10 außer Betrieb, und die heißen Abgase strömen über den Kanal 8a in den Rekuperator 3 und von dort aufgrund der Stellung des Umschaltgliedes 37 in die Abgasleitung 34. Die Zyklusdauer beträgt etwa 20 Minuten; danach erfolgt ein Umschalten der Absperrventile 17 und 18 sowie der Umschaltglieder 33 und 37, so daß die Flammenführung genau entgegengesetzt zum Pfeil 38 verläuft. Während dieses Zyklus sind die Brenner 10 in Betrieb, und die vorgewärmte Verbrennungsluft wird über den Kanal 8a zugeführt. Die Brenner 11 sind außer Betrieb, und die heißen Abgase werden über den Kanal 9a zum Rekuperator 3 und von dort über die Abgasleitung 34 zum Kamin geführt. Bei der klassischen Regelung mit ständiger Temperaturführung treten die bereits weiter oben beschriebenen Temperaturspitzen insbesondere im Flammenkern auf, was zur Entstehung sehr hoher N0ₓ-Anteile in den Abgasen führt.

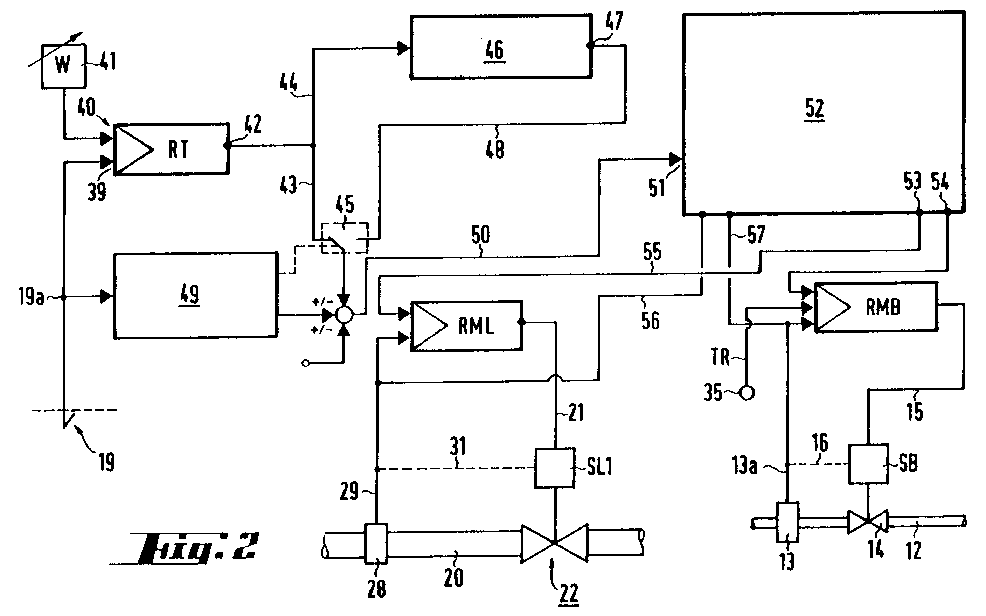

Die Regelanordnung zur Beseitigung dieses Nachteils ist in Figur 2 anhand eines Blockschaltbildes dargestellt. Soweit in Figur 2 das Luft-Zuführungssystem und das Gas-Zuführungssystem dargestellt sind, werden gleiche Bezugszeichen verwendet.

In Figur 2 ist ein Temperaturregler RT dargestellt, dem über einen ersten Eingang 39 der Fühleranschluß 19a des Temperaturfühlers 19 aufgeschaltet ist und über einen Sollwert-Eingang 40 ein einstellbarer Sollwertgeber 41 für die Vorgabe entsprechender Temperaturwerte. Der Regelausgang 42 ist über Zweigleitungen 43 und 44 mit einem Umschalter 45 und einer Operationseinheit 46 verbunden, die mit Speicherplätzen für eine Folge von Temperaturwerten und mit einer Recheneinheit für die Bildung von Mittelwerten aus den Temperaturwerten ausgerüstet ist. Die Operationseinheit 46 besitzt einen Ausgang 47, der über eine Leitung 48 mit dem bereits erwähnten Umschalter 45 verbunden ist. Dieser Umschalter 45 kann entweder manuell oder über eine Auswerteschaltung 49 betätigt werden, auf die nachfolgend noch näher eingegangen wird.

In der dargestellten Schalterstellung des Umschalters 45 wird der Reglerausgang 42 über eine Leitung 50 einem Eingang 51 eines Betriebsarten-Bausteins 52 zugeführt, der zwei Ausgänge 53 und 54 besitzt. Der erste Ausgang 53 ist über eine Leitung 55 mit dem Luftmengen-Regler RML verbunden, während der zweite Ausgang 54 dem Brennstoffmengen-Regler RMB aufgeschaltet ist. Über den Betriebsarten-Baustein 52 ist weiterhin der Istwert des Luftmengen-Reglers RML dem Brennstoffmengen-Regler RMB aufgeschaltet und zwar über die Leitungen 56 und 57. Auf diese Weise wird bei der gezeigten Stellung des Umschalters 45 die übliche Temperaturführung sowohl des Luftmengen-Reglers RML als auch des Brennstoffmengen-Reglers RMB hergestellt. Der Ausgang des Luftmengen-Reglers RML ist über den Eingang 21 dem Luftmengen-Stellglied SL1 für die Drosselklappe 22 aufgeschaltet, die natürlich auch durch ein analoges Einstellorgan für die Luftmenge ersetzt werden kann, wie beispielsweise durch die in der Drehzahl regelbaren Axial-Verdichter 23, 24 mit den Stellgliedern SL2 für die Drehzahl. Wie in Figur 2 dargestellt, ist einem zweiten Eingang des Luftmengen-Reglers RML wahlweise auch der Ausgang 29 des Durchfluß-Messers 28 oder der Ausgang 31 des Luftmengen-Stellgliedes SL1 im Sinne einer Rückführung der betreffenden Istwerte für den Luftdurchsatz aufgeschaltet. Es wurde bereits darauf hingewiesen, daß die Istwerte für die Luftmenge in Bezug auf Temperatur und Druck zu korrigieren sind.

Der Brennstoffmengen-Regler RMB ist mit drei Eingängen versehen, die - in der Zählung von oben nach unten - mit dem Ausgang 54 des Betriebsarten-Bausteins 52, mit der Sauerstoffsonde 35 und mit dem Istwert-Gebern verbunden sind, die wahlweise durch den Ausgang 13a des Durchflußmessers 13 oder durch den Ausgang 16 des Brennstoffmengen-Stellgliedes SB gebildet werden. Auf diese Weise wird eine Rückführung der betreffenden Istwerte gebildet. Die Sauerstoff-Sonde 35 liefert bekanntlich das bereits weiter oben beschriebene Trimmsignal für die Einstellung eines optimalen Mischungsverhältnisses zwischen Luft und Brennstoff zwecks Erzielung eines möglichst geringen Sauerstoff-Anteils in den Abgasen.

Nach dem Umstellen des Umschalters 45 in die entgegengesetzte Schaltstellung wird die Temperaturführung des Luftmengen-Reglers RML und des Brennstoffmengen-Reglers RMB unterbrochen, und an die Stelle des Einganges der Ist-Temperatur tritt der Ausgang der Operationseinheit 46, d.h. der in der Operationseinheit 46 gebildete Temperatur-Mittelwert, der für die Dauer der zweiten Betriebsphase festgehalten wird. Dadurch erhält der Luftmengen-Regler RML ein konstantes Eingangssignal, das allenfalls über einen der Istwerte der Luftmenge in dem Sinne korrigiert wird, daß der Luftdurchsatz konstant gehalten wird.

Auch die Temperaturführung für den Brennstoffmengen-Regler RMB ist aufgehoben. die Einflußgrößen für die Gasmengenregelung wurden bereits weiter oben angegeben.

In der Auswerteschaltung 49 werden über den Fühleranschluß 19a die Temperaturwerte auch weiterhin erfaßt und mit zwei Temperaturfenstern verglichen, die anhand der Figur 6 wie folgt erläutert werden: Es handelt sich um ein äußeres Temperaturfenster TA mit einem äußersten unteren Temperatur-Grenzwert TAU und einem äußersten oberen Temperatur-Grenzwert TAO, wobei die Breite dieses Fensters etwa 10 °C beträgt. Etwa symmetrisch innerhalb dieses äußeren Temperaturfensters befindet in etwa symmetrischer Lage ein inneres Temperaturfenster TI mit einem inneren unteren Temperatur-Grenzwert TIU und einem inneren oberen Temperatur-Grenzwert TIO, wobei die Breite dieses inneren Temperaturfensters etwa 5 °C beträgt. In Figur 6 ist die Temperatur T über die Zeit t aufgetragen. Es ist eine Temperaturkurve K als ausgezogene Linie dargestellt, die einige willkürliche Temperaturschwankungen zeigt. Solange die Temperatur entsprechend der ausgezogenen Linie innerhalb des inneren Fensters TI verläuft, geschieht keine Umschaltung auf die erste Betriebsphase mit Temperaturführung. Auch wenn die Temperaturkurve entsprechend der gestrichelten Linie K2 dem Grenzwert TI0 im Punkt P1 überschreitet, erfolgt zunächst keine Umschaltung, sondern dieses Ereignis wird lediglich in der Auswerteschaltung 49 festgehalten. Lediglich dann, wenn die Temperaturkurve K2 im Punkt P2 den Grenzwert TAO überschreitet, erfolgt eine Umschaltung in die erste Betriebsphase, d.h. für kurze Zeit wird wieder die Temperatur-Führung des Regelsystems herbeigeführt, und der Verlauf der Kurve K2 wird wieder in das innere Fenster TI zurückgeführt. Dies geschieht durch Verringerung der Luftzufuhr und im wesentlichen unter gleichzeitiger Verringerung der Brennstoffzufuhr. Analoge Verhältnisse gelten für den Fall, daß der Temperaturverlauf ausgehend von der Kurve K entsprechend der gestrichelten Kurve K1 verläuft. Beim Unterschreiten des Grenzwertes TIU im Punkt P3 erfolgt zunächst gleichfalls keine Umschaltung, wohl aber wird dieses Ereignis in der Auswerteschaltung 49 festgehalten. Eine Umschaltung erfolgt erst in dem Augenblick, in dem die Kurve K1 den Punkt P4 überschreitet. In diesem Fall erfolgt eine Umschaltung in die erste Betriebsphase, d.h. in ein Regelverfahren mit Temperaturführung der nachgeschalteten Regler. In diesem Falle bewirkt diese Umschaltung eine Erhöhung der Luftzufuhr, die mit einer proportionalen Erhöhung der Brennstoffzufuhr verbunden ist. Die zum Zeitpunkt P1 und P3 aufgetretenen Ereignisse sind in der Auswerteschaltung 49 gespeichert und haben die Wirkung, daß bei mindestens einer weiteren Unter- oder Überschreitung der inneren Grenzwerte TIU und TIO eine Erhöhung oder eine Herabsetzung der thermischen Leistung herbeigeführt wird, derart, daß die Temperaturwerte im wesentlichen in der Mitte des vorgegebenen Fensters verlaufen. Es ist von Bedeutung, daß die betreffende Umschaltung in jedem Falle außerhalb der sogenannten "Brandzeit" des Ofens erfolgt.

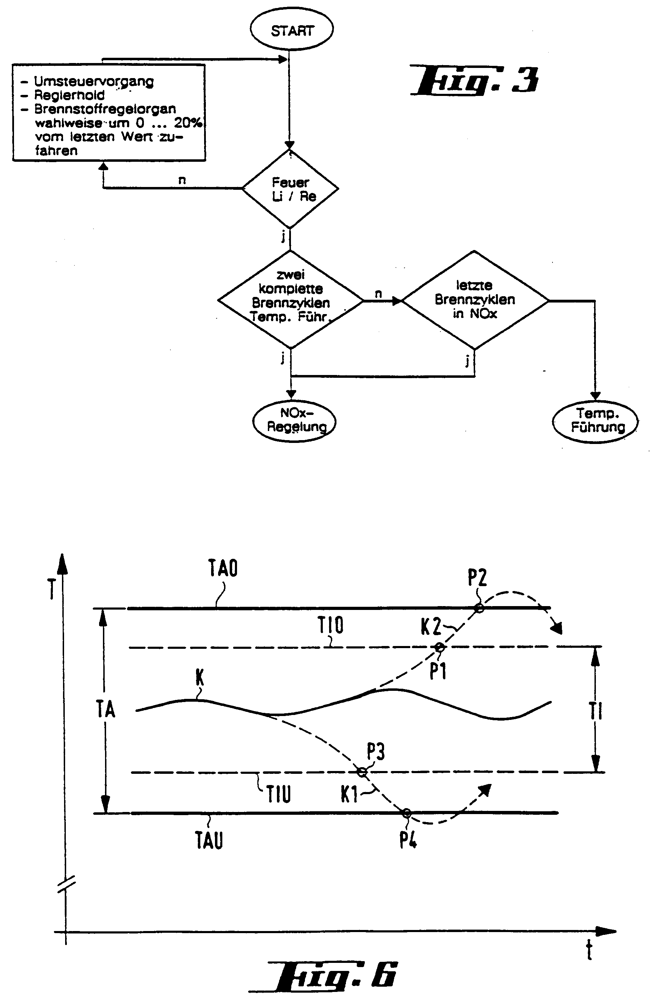

Die Signalflußdiagramme nach den Figuren 3 bis 5 sind aus sich heraus verständlich, so daß nur einige wenige zusätzliche Erläuterungen gegeben werden.

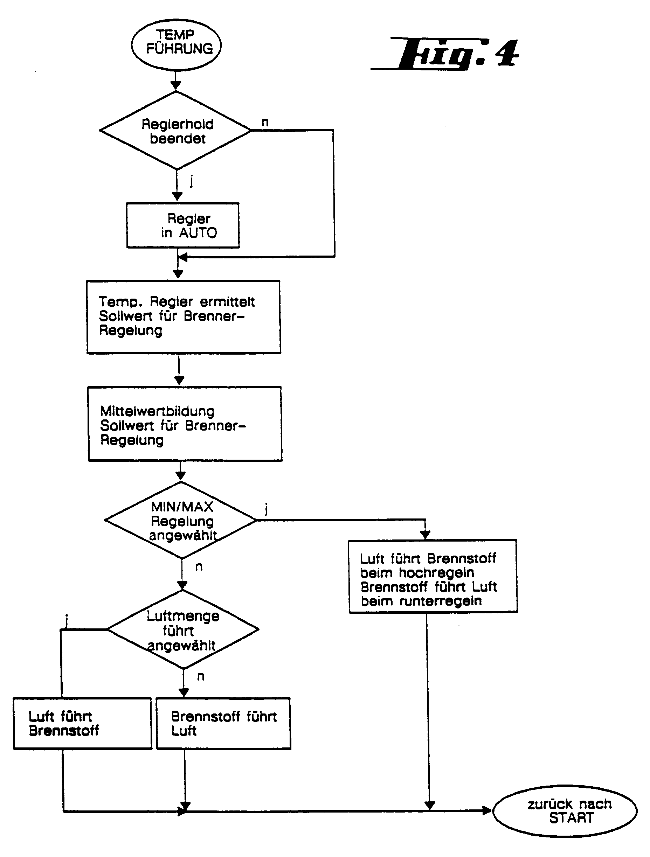

Figur 3 beschreibt die Startphase einer Schmelze, wobei zunächst der Beginn der Beheizung entweder in der linken Ofenhälfte 7a oder in der rechten Ofenhälfte 7b festgelegt wird. Beispielhaft werden alsdann zwei komplette Brennzyklen mit Temperaturführung der nachgeschalteten Regler durchgeführt. Wenn dies zu einem brauchbaren Temperatur-Mittelwert führt, wird die Temperaturführung abgekoppelt und mit konstanter Luftzufuhr die sogenannte NOₓ-Regelung durchgeführt. Liegen die Mittelwerte über die beiden kompletten Brennzyklen außerhalb der Fenster nach Figur 6, so erfolgt bis auf weiteres eine Temperaturführung, die anhand von Figur 4 erläutert wird.

Nach Beendigung der Regler-Haltezeit wird auf Regler-Automatik umgeschaltet, und der Temperatur-Regler ermittelt den Sollwert für die Brennerregelung. Im Anschluß daran erfolgt eine Mittelwertbildung als Sollwert für die Brenner-Regelung. Das Diagramm zeigt noch zwei alternative Möglichkeiten, nämlich die Führung der Brennstoffmenge durch die Luftmenge und den umgekehrten Weg, nämlich die Führung der Luftmenge durch die Brennstoffmenge.

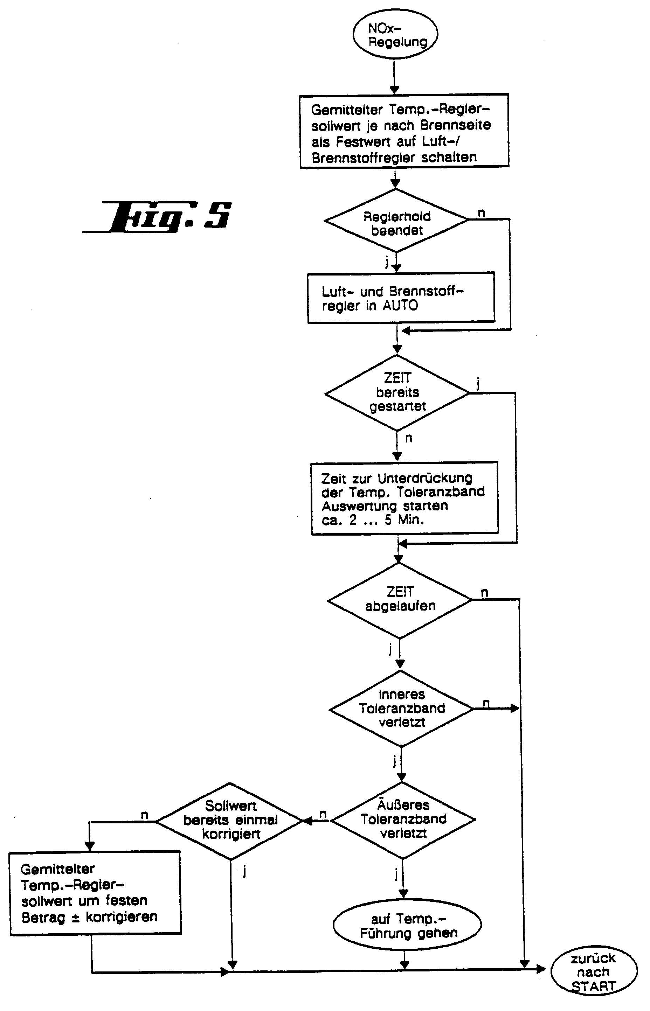

Der erfindungswesentliche Teil der Regelung ist anhand von Figur 5 erläutert, nämlich die Regelung im Hinblick auf eine Minimierung des NOₓ-Anteils in den Abgasen. Nach der beschriebenen Bildung eines Temperatur-Mittelwertes in Bezug auf die jeweilige Ofenhälfte bzw. Brennseite wird dieser Mittelwert als Festwert dem Luftmengen-Regler oder dem Brennstoffmengen-Regler aufgeschaltet. Nach Beendigung der Regler-Haltezeit erfolgt die Regelung im Automatik-Betrieb. Nach Ablauf einer bestimmten Zeit erfolgt durch die Auswerteschaltung 49 eine Überprüfung, ob die oberen oder unteren Grenzwerte des inneren oder äußeren Fensters bzw. Toleranzbandes verletzt worden sind. Werden die Grenzwerte des äußeren Fensters verletzt, so erfolgt wieder eine Umschaltung auf eine Temperatur-Führung.

## Patentansprüche

1. Verfahren zum Regeln des Verbrennungsvorgangs in Glas-Wannenöfen (2) mit in Zyklen gesteuerter, alternierender Versorgung des Ofenraums (7) beiderseits der Wannen-Längsachse (A-A) mit fossilen Brennstoffen und Verbrennungsluft unter Erfassung der Temperaturwerte im Ofenraum (7) und mindestens zeitweiser Regelung der Verbrennungsluftmenge (ML) und der Brennstoffmenge (MB) in Abhängigkeit von den Temperaturwerten mittels eines Luftmengen-Reglers (RML) und eines Brennstoffmengen-Reglers (RMB) und zugehöriger Stellglieder (SL, SB) für die Luftleitung (20) und für die Brennstoffleitung (12) bei gleichzeitiger Berücksichtigung des Verhältnisses von Luftmenge (ML) zur Brennstoffmenge (MB) **dadurch gekennzeichnet**, daß in einer ersten Betriebsphase eine Reihe von Temperaturwerten gemessen und über mindestens einen Zyklus gespeichert und daraus ein Temperatur-Mittelwert gebildet wird, und daß in einer weiteren Betriebsphase die Regelung der Verbrennungsluftmenge (ML) und der Brennstoffmenge (MB) in Abhängigkeit von dem gebildeten Temperatur-Mittelwert durchgeführt wird.

2. Verfahren nach Anspruch 1, **dadurch gekennzeichnet**, daß in der weiteren Betriebsphase durch den Luftmengen-Regler (RML) das Luftmengen-Stellglied (SL) in Abhängigkeit von dem gebildeten Temperatur-Mittelwert zumindest vorübergehend auf einem konstanten Luftmengen-Wert (WL), der der von dem Temperatur-Mittelwert im Vergleich zu einem Temperatur-Sollwert vorgegebenen Heizleistung entspricht, festgehalten wird, und während dieser Zeit durch den Brennstoffmengen-Regler (RMB) das Brennstoffmengen-Stellglied (SB) geregelt wird.

3. Verfahren nach Anspruch 1, **dadurch gekennzeichnet**, daß in der weiteren Betriebsphase durch den Brennstoffmengen-Regler (RMB) das Brennstoffmengen-Stellglied (SB) in Abhängigkeit von dem gebildeten Temperatur-Mittelwert zumindest vorübergehend auf einem konstanten Brennstoffmengen-Wert (WB), der der von dem Temperatur-Mittelwert im Vergleich zu einem Temperatur-Sollwert vorgegebenen Heizleistung entspricht, festgehalten wird und während dieser Zeit durch den Luftmengen-Regler (RML) das Luftmengen-Stellglied (SL) geregelt wird.

4. Verfahren nach Anspruch 1, **dadurch gekennzeichnet**, daß das Brennstoffmengen-Stellglied (SB) zusätzlich in Abhängigkeit von Parametern wie Druck und/oder Durchsatz in der Brennstoffleitung (12) geregelt wird.

5. Verfahren nach Anspruch 1, **dadurch gekennzeichnet**, daß die Zahl der Zyklen für die Bestimmung des Temperatur-Mittelwertes zwischen 2 und 10, vorzugsweise zwischen 3 und 6, gewählt wird.

6. Verfahren nach Anspruch 2, **dadurch gekennzeichnet**, daß der Sauerstoffgehalt in den Abgasen des Ofenraums (7) gemessen und ein dem Sauerstoffgehalt entsprechendes Trimmsignal (TR) dem Brennstoffmengen-Regler (RMB) zugeführt und in diesem Regler in der Weise verarbeitet wird, daß durch Beeinflussung des Brennstoffmengen-Stellgliedes (SB) der Sauerstoffgehalt in den Abgasen auf einen kleinstmöglichen Wert geregelt wird, der vorzugsweise unterhalb von 1,5 % liegt.

7. Verfahren nach Anspruch 3, **dadurch gekennzeichnet**, daß der Sauerstoffgehalt in den Abgasen des Ofenraums (7) gemessen und ein dem Sauerstoffgehalt entsprechendes Trimmsignal (TR) dem Luftmengen-Regler (RML) zugeführt und in diesem Regler in der Weise verarbeitet wird, daß durch Beeinflussung des Luftmengen-Stellgliedes (SL) der Sauerstoffgehalt in den Abgasen auf einen kleinstmöglichen Wert geregelt wird, der vorzugsweise unterhalb von 1,5 % liegt.

8. Verfahren nach Anspruch 1, **dadurch gekennzeichnet**, daß die Temperaturwerte an der Unterseite der Ofendecke gemessen werden.

9. Verfahren nach Anspruch 1, **dadurch gekennzeichnet**, daß als Meßgrößen (Istwerte) für die Verbrennungsluftmenge und die Brennstoffmenge die Stellgrößen für die Stellung der Stellglieder (SL, SB) verwendet werden.

10. Verfahren nach Anspruch 1, **dadurch gekennzeichnet**, daß während der weiteren Betriebsphase, in der die Temperaturführung abgekoppelt ist, die Temperaturwerte weiterhin erfaßt und mit einem äußeren Temperatur-Fenster mit je einem äußersten unteren und einem äußersten oberen Temperatur-Grenzwert (TAU, TAO) verglichen werden, und daß beim Unterschreiten des äußersten unteren Temperatur-Grenzwertes (TAU) ein Umschalten auf die Regelung gemäß der ersten Betriebsphase mit Erhöhung der thermischen Leistung und beim Überschreiten des äußersten oberen Temperatur-Grenzwertes (TAO) ein Umschalten auf die Regelung der ersten Betriebsphase mit Verringerung der thermischen Leistung herbeigeführt wird.

11. Verfahren nach Anspruch 10, **dadurch gekennzeichnet**, daß die Temperaturwerte mit einem engeren inneren Temperatur-Fenster verglichen werden, das je einen inneren unteren und einen inneren oberen Temperatur-Grenzwert (TIU, TIO) besitzt, daß die erstmalige Unter- oder Überschreitung dieser inneren Temperatur-Grenzwerte (TIU, TIO) ohne Auslösung einer Regelhandlung gespeichert werden und daß bei mindestens einer weiteren Unter- oder Überschreitung dieser inneren unteren oder inneren oberen Temperatur-Grenzwerte eine Erhöhung oder eine Herabsetzung der thermischen Leistung herbeigeführt wird, derart, daß die Temperaturwerte im wesentlichen in der Mitte des vorgegebenen Fensters verlaufen.

12. Verfahren nach Anspruch 11, **dadurch gekennzeichnet**, daß bei Unter- oder Überschreitung der inneren Temperatur-Grenzwerte (TIU, TIO) die Temperaturwerte ohne Auslösung einer Regelhandlung gespeichert werden, und daß bei mindestens einer weiteren Unter- oder Überschreitung des gleichen inneren unteren (TIU) oder inneren oberen Temperatur-Grenzwertes (TIO) außerhalb der Brandzeiten eine Erhöhung oder eine Herabsetzung der thermischen Leistung herbeigeführt wird.

13. Verfahren nach Anspruch 10, **dadurch gekennzeichnet**, daß nach dem Umschalten der Regelung in die erste Betriebsphase eine erneute Bildung eines Temperatur-Mittelwerts durchgeführt wird, mit dem dann die Regelung in einer erneuten weiteren Betriebsphase durchgeführt wird.

14. Verfahren nach Anspruch 1, **dadurch gekennzeichnet**, daß die Regelung für jede Ofenseite beiderseits der Wannen-Mittelachse getrennt durchgeführt wird.

15. Verfahren nach Anspruch 1, **dadurch gekennzeichnet**, daß zwischen die erste und die weitere Betriebsphase eine Regler-Haltephase von 30 bis 600, vorzugsweise von 120 bis 300 Sekunden Dauer eingeschoben wird.

16. Anordnung zur Durchführung des Regelverfahrens nach Anspruch 1 bei Glas-Wannenöfen (2) mit
a) einem Ofenraum (7), in dem beiderseits der Wannen-Längsachse (A-A) mindestens je eine Luftzuführungsöffnung (8, 9) und mindestens je ein Brenner (10, 11) für fossile Brennstoffe angeordnet sind und in dem sich mindestens ein Temperaturfühler (19) befindet, dem ein Temperatur-Regler (RT) mit einem Sollwert-Eingang (40) und einem Reglerausgang (42) nachgeschaltet ist,
b) einer Luftzuführungsleitung (20, 20a, 20b) mit einem Luftmengen-Regler (RML) und einem Luftmengen-Stellglied (SL), für die Versorgung der mindestens einen Luftzuführungsöffnung (8, 9),
c) einem Istwertgeber (26, 28, 31) für die Luftmenge,
d) einer Brennstoff-Zuführungsleitung (12, 12a, 12b) mit einem Brennstoffmengen-Regler (RMB) und einem Brennstoffmengen-Stellglied (SB) für die Versorgung des mindestens einen Brenners (10, 11), wobei der Istwert-Geber (26, 28, 31) für die Luftmenge dem Brennstoffmengen-Regler (RMB) im Sinne der Bildung eines vorgegebenen Verhältnisses zwischen Brennstoff- und Luftmenge aufgeschaltet ist,
e) Umschaltgliedern (17, 18, 33, 37) für eine zyklisch gesteuerte, alternierende Versorgung der beiderseits der Wannen-Längsachse (A-A) befindlichen Hälften (7a, 7b) des Ofenraums (7) mit Brennerflammen,
**dadurch gekennzeichnet**, daß
f) der Temperatur-Regler (RT) einer Operationseinheit (46) mit Speicherplätzen für eine Folge von Temperaturwerten und mit einer Recheneinheit für die Bildung von Mittelwerten aus den Temperaturwerten aufgeschaltet ist,
g) ein Umschalter (45) vorhanden ist, mit dem wahlweise der Regelausgang (42) des Temperatur-Reglers (RT) oder der Ausgang der Operationseinheit (46) mit dem gebildeten Temperatur-Mittelwert als Sollwert einem Betriebsarten-Baustein (52) mit einem ersten Ausgang (53) zum Luftmengen-Regler (RML) und mit einem zweiten Ausgang (54) zum Brennstoffmengen-Regler (RMB) aufschaltbar ist, wobei die Auslegung der Anordnung so getroffen ist, daß in einer ersten Betriebsphase eine Reihe von Temperaturwerten gemessen und über mindesten einen Zyklus gespeichert und daraus ein Temperatur-Mittelwert gebildet wird, wobei in der ersten Betriebsphase entweder
g1) über den Betriebsarten-Baustein (52) der Istwert des Luftmengen-Reglers (RML) dem Brennstoffmengen-Regler (RMB) aufschaltbar ist und in einer weiteren Betriebsphase durch den Luftmengen-Regler (RML) das Luftmengen-Stellglied (SL) in Abhängigkeit von dem gebildeten Temperatur-Mittelwert zumindest vorübergehend auf einem konstanten Luftmengen-Wert (WL) festgehalten wird und während dieser Zeit durch den Brennstoffmengen-Regler (RMB) das Brennstoffmengen-Stellglied (SB) geregelt wird,
oder
g2) über den Betriebsarten-Baustein (52) der Istwert des Brennstoffmengen-Reglers (RMB) dem Luftmengen-Regler (RML) aufschaltbar ist und in einer weiteren Betriebsphase durch den Brennstoffmengen-Regler (RMB) das Brennstoffmengen-Stellglied (SB) in Abhängigkeit von dem gebildeten Temperatur-Mittelwert zumindest vorübergehend auf einem konstanten Brennstoffmengen-Wert (WB) festgehalten wird und während dieser Zeit durch den Luftmengen-Regler (RML) das Luftmengen-Stellglied (SL) geregelt wird.

17. Anordnung nach Anspruch 16, **dadurch gekennzeichnet**, daß dem Temperaturfühler (19) eine Auswerteschaltung (49) nachgeschaltet ist, in der die Temperatur-Werte weiterhin erfaßt und mit einem äußeren Temperatur-Fenster (TA) mit je einem äußersten unteren und einem äußersten oberen Temperatur-Grenzwert (TAU, TAO) verglichen werden, und daß beim Unterschreiten des äußersten unteren Temperatur-Grenzwertes (TAU) ein Umschalten auf die Regelung gemäß der ersten Betriebsphase mit Erhöhung der thermischen Leistung und beim Überschreiten des äußersten oberen Temperatur-Grenzwertes (TAO) ein Umschalten auf die Regelung der ersten Betriebsphase mit Verringerung der thermischen Leistung herbeigeführt wird.

18. Anordnung nach Anspruch 17, **dadurch gekennzeichnet**, daß in der Auswerteschaltung (49) die Temperaturwerte mit einem engeren inneren Temperatur-Fenster (TI) verglichen werden, da je einen inneren unteren und einen inneren oberen Temperatur-Grenzwert (TIU, TIO) besitzt und daß bei Unter- oder Überschreitung dieser inneren Temperatur-Grenzwerte eine Erhöhung oder eine Herabsetzung der thermischen Leistung herbeigeführt wird, derart, daß die Temperaturwerte im wesentlichen in der Mitte des vorgegebenen Fensters verlaufen.

## Claims

1. Process for controlling the combustion process in glass tank furnaces (2) with in cycle controlled alternating supply of the furnace chamber (7) on both sides of the longitudinal tank axis (A-A) with fossil fuels and combustion air whilst determining the temperature values in the furnace chamber (7) and at least temporary control of the combustion air volume (ML) and the fuel volume (MB) in dependence of the temperature values by means of an air-volume regulator (RML) and a fuel-volume regulator (RMB) and associated control members (SL, SB) for the air pipe (20) and for the fuel pipe (12) whilst at the same time taking into consideration the ratio between air volume (M) and fuel volume (MB), **characterised in that** in a first operational phase a series of temperature values is measured and stored over at least one cycle, and therefrom is established a mean temperature value, and in a further operational phase the control of the combustion air volume (ML) and of the fuel volume (MB) is carried out in dependence of the established mean temperature value.

2. Process according to Claim 1, **characterised in that** in the further operational phase the air-volume regulator (RML) holds the air-volume control member (SL) in dependence of the established mean temperature value at least temporarily at a constant air-volume value (WL) which corresponds with the heat output set by the mean temperature value as compared to a nominal temperature value, and during this time the fuel-volume control member (SB) is controlled by the fuel-volume regulator (RMB).

3. Process according to Claim 1, **characterised in that** in the further operational phase the fuel-volume regulator (RMB) holds the fuel-volume control member (SB) in dependence of the established mean temperature value at least temporarily at a constant fuel-volume value (WB) which corresponds with the heat output set by the mean temperature value as compared to a nominal temperature value, and during this time the air-volume control member (SL) is controlled by the air-volume regulator (RML).

4. Process according to Claim 1, **characterised in that** the fuel-volume control member (SB) is additionally controlled in dependence of parameters such as pressure and/or throughput in the fuel pipe (12).

5. Process according to Claim 1, **characterised in that** the number of cycles for determining the mean temperature value is chosen between 2 and 10, preferably between 3 and 6.

6. Process according to Claim 2, **characterised in that** the oxygen content in the waste gases of the furnace chamber (7) is measured, and a trimming signal (TR) which corresponds with the oxygen content is delivered to the fuel-volume regulator (RMB) and processed in said regulator in such a manner that by acting on the fuel-volume control member (SB) the oxygen content in the waste gases is regulated to the smallest possible value which preferably lies below 1.5%.

7. Process according to Claim 3, **characterised in that** the oxygen content in the waste gases of the furnace chamber (7) is measured and a trimming signal (TR) which corresponds with the oxygen content is delivered to the air-volume regulator (RML) and processed in said regulator in such a manner that by acting on the air-volume control member (SL) the oxygen content in the waste gases is regulated to the smallest possible volume which preferably lies below 1.5%.

8. Process according to Claim 1, **characterised in that** the temperature values are measured at the bottom side of the furnace ceiling.

9. Process according to Claim 1, **characterised in that** the control values for setting the control members (SL, SB) are used as measuring values (actual values) for the combustion-air volume and the fuel volume.

10. Process according to Claim 1, **characterised in that** during the further operational phase, in which the temperature guidance is disconnected, the temperature values are still determined and compared to an external temperature window with each an outermost lower and an outermost upper temperature threshold value (TAU, TAO), and on dropping below the outermost lower temperature threshold (TAU) a switchover to the control is initiated according to the first operational phase with an increase of thermal output, and on exceeding the outermost upper temperature threshold value (TAO) a switchover to the control of the first operational phase is initiated with a decrease of thermal output.

11. Process according to Claim 10, **characterised in that** the temperature values are compared to a narrower inner temperature window with each an inner lower and an inner upper temperature threshold value (TIU, TIO), and a first time decrease below, or increase above these internal temperature threshold values (TIU, TIO) is stored without triggering a control operation, and at least one further decrease below, or increase above these internal lower or internal upper temperature threshold values initiates an increase or a decrease of thermal output in such a manner that the temperature values remain essentially in the centre of the given window.

12. Process according to Claim 11, **characterised in that** when going below or above the internal temperature threshold values (TIU, TIO) the temperature values are stored without triggering a control operation, and with at least one further decrease below or increase above the same inner lower (TIU) or inner upper temperature threshold value (TIO) outside the furnace times, an increase or decrease of thermal output will result.

13. Process according to Claim 10, **characterised in that** after switchover of the control into the first operational phase, a new mean temperature value is established by means of which a control is carried out in a new additional operational phase.

14. Process according to Claim 1, **characterised in that** the control for each furnace side is carried out on both sides of the central axis of the tank.

15. Process according to Claim 1, **characterised in that** between the first and the additional operating phase is placed a control holding phase with a duration of between 30 and 600 seconds, preferably between 120 and 300 seconds.

16. Configuration for carrying out the control process according to Claim 1 with glass tank furnaces (2), comprising
a: a furnace chamber (7), having on both sides of the longitudinal axis of the tank (A-A) at least each one air-delivery opening (8, 9) and at least each one torch (10, 11) for fossil fuels, and wherein is placed at least one temperature sensor (19) provided downstream thereof with a temperature regulator (RT) with a nominal value input (40) and a regulator outlet (42);
b: an air-delivery pipe (20, 20a, 20b) with an air-volume regulator (RML) and an air-volume control member (SL) for feeding the at least one air-delivery opening (8, 9);
c: an actual value controller (26, 28, 31) for the air volume;
d: a fuel delivery pipe (12, 12a, 12b) with a fuel-volume control regulator (RMB) and a fuel-volume control member (SB) for feeding the at least one torch (10, 11), and the actual value controller (26, 28, 31) for the air volume as added to the fuel-volume controller (RMB) in the meaning of establishing a preset ratio between fuel and air volume;
e: switch members (17, 18, 33, 37) for cyclically controlled alternating supply of halves (7a, 7b) of the furnace chamber (7) positioned on both sides of the longitudinal axis of the tank (A-A) with torch flames,
**characterised in that**
f: the temperature regulator (RT) is assigned to an operational unit (46) with memory places for a sequence of temperature values and with a computer unit for establishing mean values from the temperature values;
g: a switch (45) is provided by means of which selectively either the control output (42) of the temperature regulator (RT) or the output of the operational unit (46) with the established mean temperature value as nominal value is assigned to an operational mode module (52) with a first output (53) to the air-volume regulator (RML) and a second output (54) to the fuel-volume regulator (RMB), and the configuration of the arrangement is such that in a first operational phase a series of temperature values is measured and stored for at least one cycle, and therefrom is formed a mean temperature value, and in the first operational phase either
g1: the actual value of the air-volume regulator (RML) is via operational mode module (52) assigned to the fuel-volume regulator (RMB), and in a further operational phase the air-volume control member (SL) is at least temporarily held by the air-volume regulator (RML) in dependence of the established mean temperature value at a constant air-volume value (WL), and during this time the fuel-volume control member (SB) is controlled by the fuel-volume regulator (RMB),
or
g2: the actual value of the fuel-volume regulator (RMB) is assigned via the operational mode module (52) to the air-volume regulator (RML), and in an additional operational phase the fuel-volume control member (SB) is at least temporarily held by the fuel-volume regulator (RMB) in dependence of the formed mean temperature value on a constant fuel-volume value (WB), and during this time the air-volume control member (SL) is controlled by the air-volume regulator (RML).

17. Configuration according to Claim 16, **characterised in that** downstream of the temperature sensor (19) is provided an evaluation circuit (49) where the temperature values will be determined further and compared to an outer temperature window (TA) with respective outermost lower and an outermost upper temperature threshold value (TAU, TAO), and a switchover to the control according to the first operational phase with an increase in thermal output is performed when dropping below the outermost lower temperature threshold value (TAU), and a switchover to the control of the first operational phase is performed with a decrease in thermal output.

18. Arrangement according to Claim 17, **characterised in that** in the evaluation circuit (49) the temperature values are compared to a narrower inner temperature window (TI) which has a respective inner lower and an inner upper temperature threshold value (TIU, TIO), and an increase or reduction of thermal output is carried out when going below or above these inner temperature threshold values so that the temperature values extend essentially in the centre of the given window.

## Revendications

1. Procédé pour réguler l'opération de combustion dans des fours à cuve de verrerie (2) comportant une alimentation alternante à commande cyclique de la chambre de four (7) des deux côtés de l'axe longitudinal (A-A) de la cuve avec des combustibles fossiles et avec de l'air de combustion, en détectant les valeurs de température dans la chambre de four (7) et en régulant du moins temporairement la quantité d'air de combustion (ML) et la quantité de combustible (MB) en dépendance des valeurs de température au moyen d'un régulateur de quantité d'air (RML) et d'un régulateur de quantité de combustible (RMB) et d'organes de réglage (SL, SB) associés pour la conduite d'air (20) et pour la conduite de combustible (12), en prenant en compte simultanément la relation de la quantité d'air (ML) par rapport à la qualité de combustible (MB), caractérisé en ce que dans une première phase de fonctionnement, on mesure une série de valeurs de température et on les mémorise sur au moins un cycle et on forme à partir de celles-ci une valeur de température moyenne, et en ce que dans une autre phase de fonctionnement, on procède à la régulation de la quantité d'air de combustion (ML) et de la quantité de combustible (MB) en dépendance de la valeur de température moyenne formée.

2. Procédé selon la revendication 1, caractérisé en ce que dans l'autre phase de fonctionnement, l'organe de réglage (SL) de la quantité d'air est maintenu par le régulateur de quantité d'air (RML) en dépendance de la valeur de température moyenne du moins temporairement à une valeur de quantité d'air constante (WL) qui correspond à la puissance thermique prédéterminée par la valeur de température moyenne en comparaison avec une valeur de température de consigne, et en ce que pendant ce temps, l'organe de réglage (SB) de la quantité de combustible est régulé par le régulateur de quantité de combustible (RMB).

3. Procédé selon la revendication 1, caractérisé en ce que pendant l'autre phase de fonctionnement, l'organe de réglage (SB) de la quantité de combustible est maintenu par le régulateur de quantité de combustible (RMB) en dépendance de la valeur de température moyenne du moins temporairement à une valeur de quantité de combustible constante (WB) qui correspond à la puissance thermique prédéterminée par la valeur de température moyenne en comparaison avec une valeur de température de consigne, et en ce que pendant ce temps, l'organe de réglage (SL) de quantité d'air est régulé par le régulateur de quantité d'air (RML).

4. Procédé selon la revendication 1, caractérisé en ce que l'organe de réglage (SB) de quantité de combustible est régulé en supplément en dépendance de paramètres tels que la pression et/ou le débit dans la conduite de combustible (12).

5. Procédé selon la revendication 1, caractérisé en ce que le nombre des cycles pour déterminer la valeur de température moyenne est choisi entre 2 et 10, de préférence entre 3 et 6.

6. Procédé selon la revendication 2, caractérisé en ce que l'on mesure la teneur en oxygène dans les gaz d'échappement dans la chambre de four (7) et on amène au régulateur de quantité de combustible (RMB) un signal de compensation (TR) qui correspond à la teneur en oxygène, qui est traité de telle sorte que dans ce régulateur que la teneur en oxygène dans les gaz d'échappement est régulée à une valeur minimum de préférence inférieure à 1,5 % par influence sur l'organe de réglage (SB) de la quantité de combustible.

7. Procédé selon la revendication 3, caractérisé en ce que l'on mesure la teneur en oxygène dans les gaz d'échappement dans la chambre de four (7) et on amène au régulateur de quantité d'air (RML) un signal de compensation (TR) qui correspond à la teneur en oxygène, qui est traité de telle manière dans ce régulateur que la teneur en oxygène dans les gaz d'échappement est régulée à une valeur minimum de préférence inférieure à 1,5 % par influence sur l'organe de réglage (SL) de quantité d'air.

8. Procédé selon la revendication 1, caractérisé en ce que l'on mesure les valeurs de température sur la face inférieure du plafond du four.

9. Procédé selon la revendication 1, caractérisé en ce que l'on utilise comme valeurs mesurées (valeurs réelles) pour la quantité d'air de combustion et pour la quantité de combustible les valeurs de régulation pour le réglage des organes de réglage (SL, SB).

10. Procédé selon la revendication 1, caractérisé en ce que pendant l'autre phase de fonctionnement dans laquelle le contrôle de température de découplé, on continue à détecteur les valeurs de température et on les compare avec une plage de température extérieure présentant des valeurs limites de températures respectives extrême inférieure et extrême supérieure (TAU, TAO), et en ce que lorsque l'on passe au-dessous de la valeur limite de température extrême inférieure (TAU), on provoque une commutation vers la régulation selon la première phase de fonctionnement avec augmentation de la puissance thermique, et lorsque l'on dépasse la valeur limite de température extrême supérieure (TAO), on provoque une commutation vers la régulation de la première phase de fonctionnement avec réduction de la puissance thermique.

11. Procédé selon la revendication 10, caractérisé en ce que l'on compare les valeurs de température avec une plage de température intérieure plus étroite qui présente des valeurs limites de température respectives intérieure inférieure et intérieure supérieure (TIU, TIO), en ce que l'on mémorise le premier passage au-dessous ou au-dessus de ces valeurs limites de température intérieure (TIU, TIO) sans déclenchement d'une action de régulation, et en ce que lors d'au moins un autre passage au-dessous ou au-dessus des valeurs limites de température intérieure inférieure ou intérieure supérieure, on provoque une augmentation ou une réduction de la puissance thermique, de telle sorte que les valeurs de température s'étendent sensiblement au milieu de la plage prédéterminée.

12. Procédé selon la revendication 11, caractérisé en ce que lors du passage au-dessous ou au-dessus des valeurs limites de températures intérieures (TIU, TIO), on mémorise les valeurs de température sans déclenchement d'une action de régulation, et en ce que lors d'au moins un autre passage au-dessous ou au-dessus de la même valeur limite de température intérieure inférieure (TIU) ou intérieure supérieure (TIO) à l'extérieur des temps de combustion, on provoque une augmentation ou une réduction de la puissance thermique.

13. Procédé selon la revendication 10, caractérisé en ce qu'après commutation de la régulation vers la première phase de fonctionnement, on procède à la formation d'une nouvelle valeur de température moyenne avec laquelle on procède alors à la régulation dans une nouvelle autre phase de fonctionnement.

14. Procède selon la revendication 1, caractérisé en ce que l'on effectue la régulation pour chaque côté du four séparément des deux côtés de l'axe médian de la cuve.

15. Procédé selon la revendication 1, caractérisé en ce que l'on introduit entre la première et la seconde phase de fonctionnement une phase de maintien de régulation d'une durée de 30 à 600, de préférence de 120 à 300 secondes.

16. Agencement pour mettre en oeuvre le procédé de régulation selon la revendication 1 dans des fours à cuve de verrerie (2), comportant :
a) une chambre de four (7) dans laquelle sont agencés, des deux côtés de l'axe longitudinal (A-A) de la cuve, au moins une ouverture d'amenée d'air respective (8, 9) et au moins un brûleur respectif (10, 11) pour des combustibles fossiles, et dans laquelle se trouve au moins un palpeur de température (19) en aval duquel est agencé un régulateur de température (RT) comportant une entrée de valeur de consigne (40) et une sortie de régulation (42),
b) une conduite d'amenée d'air (20, 20a, 20b) comportant un régulateur de quantité d'air (RML) et un organe de réglage (SL) de la quantité d'air pour alimenter ladite au moins une ouverture d'amenée d'air (8, 9),
c) un capteur de valeur réelle (26, 28, 31) pour la quantité d'air,
d) une conduite d'amenée de combustible (12, 12a, 12b) comportant un régulateur de quantité de combustible (RMB) et un organe de réglage (SB) de la quantité de combustible pour alimenter ledit au moins un brûleur (10, 11), le capteur de valeur réelle (26, 28, 31) pour la quantité d'air étant branché avec le régulateur de quantité de combustible (RMB) dans le sens de la formation d'une relation prédéterminée entre la quantité de combustible et la quantité d'air,
e) des organes commutateurs (17, 18, 33, 37) pour une alimentation alternante à commande cyclique des moitiés (7a, 7b) de la chambre de four (7) situées des deux côtés de l'axe longitudinal (A-A) de la cuve, avec des flammes de brûleur,
caractérisé en ce que
f) le régulateur de température (RT) est branché avec une unité opérationnelle (46) comportant des emplacements de mémoire pour une série de valeurs de température et comportant une unité de calcul pour former des valeurs moyennes à partir des valeurs de température,
g) il est prévu un commutateur (45) par lequel on peut brancher au choix la sortie (42) du régulateur de température (RT) ou la sortie de l'unité opérationnelle (46), avec la valeur de température moyenne formée en tant que valeur de consigne, sur un module de modes de fonctionnement (52) présentant une première sortie (53) vers le régulateur de quantité d'air (RML) et une seconde sortie (54) vers le régulateur de quantité de combustible (RMB), l'agencement étant conçu de telle sorte que dans une première phase de fonctionnement, on mesure et mémorise une série de valeurs de température sur au moins un cycle et on forme à partir de celles-ci une valeur de température moyenne, et dans la première phase de fonctionnement, on peut, soit :
g1) via le module de modes de fonctionnement (52), appliquer la valeur réelle du régulateur de quantité d'air (RML) au régulateur de quantité de combustible (RMB), et dans une autre phase de fonctionnement on maintient l'organe de réglage (SL) de la quantité d'air du moins temporairement à une valeur de quantité d'air constante (WL) par le régulateur de quantité d'air (RML) en dépendance de la valeur de température moyenne formée, et pendant ce temps l'organe de réglage (SB) de la quantité de combustible est régulé par le régulateur de quantité de combustible (RMB),
soit :
g2) via le module de modes de fonctionnement (52), appliquer la valeur réelle du régulateur de quantité de combustible (RMB) au régulateur de quantité d'air (RML), et dans une autre phase de fonctionnement on maintient l'organe de réglage (SB) de la quantité de combustible du moins temporairement à une valeur de quantité de combustible constante (WB) par le régulateur de quantité de combustible (RMB) en dépendance de la valeur de température moyenne formée, et pendant ce temps l'organe de réglage (SL) de la quantité d'air est régulé par le régulateur de quantité d'air (RML).

17. Agencement selon la revendication 16, caractérisé en ce qu'il est prévu en aval du palpeur de température (19) un circuit d'évaluation (49) dans lequel les valeurs de température continuent d'être détectées et elles sont comparées avec une plage de température extérieure (TA) présentant des valeurs limites de température extrême inférieure et extrême supérieure (TAU, TAO), et en ce que lorsque l'on passe au-dessous de la valeur limite de température extrême inférieure (TAU), on provoque une commutation vers la régulation selon la première phase de fonctionnement avec augmentation de la puissance thermique, et lorsque l'on passe au-dessus de la valeur limite de température extrême supérieure (TAO), on provoque une commutation vers la régulation de la première phase de fonctionnement avec réduction de la puissance thermique.

18. Agencement selon la revendication 17, caractérisé en ce que les valeurs de température sont comparées dans le circuit d'évaluation (49) avec une plage de température intérieure plus étroite (TI) qui présente des valeurs limites de température intérieure inférieure et intérieure supérieure (TIU, TIO), en ce que lors du premier passage au-dessous ou au-dessus de ces valeurs limites de température intérieure, une augmentation ou une réduction de la puissance thermique est provoquée, de telle sorte que les valeurs de température s'étendent sensiblement au milieu de la plage prédéterminée.
